# EUROPEAN PATENT SPECIFICATION

(11) **EP 3 145 753 B1**
(45) Date of publication and mention of the grant of the patent: **04.03.2020**
(21) Application number: 15723104.4
(22) Date of filing: 08.05.2015
(51) Int. Cl.: B60P 3/20, F25D 17/00

(54) **ADJUSTABLE HEIGHT RETURN AIR BULKHEAD**
HÖHENVERSTELLBARER RÜCKLUFTSCHOTT
CLOISON D'AIR DE RETOUR À HAUTEUR RÉGLABLE

(30) Priority: 21.05.2014 US 201462001447 P
(43) Date of publication of application: 29.03.2017
(73) Proprietor: Carrier Corporation, Farmington, Connecticut 06032 (US)
(72) Inventor: STAUTER, Richie Charles, Syracuse, New York 13221 (US); LEECH, Brad George, Syracuse, New York 13221 (US); FORMAN, Jason Stuart, Syracuse, New York 13221 (US); VOLINO, Frank A., Syracuse, New York 13221 (US); KNIGHT, Alan John, Syracuse, New York 13221 (US)
(74) Representative: Schmitt-Nilson Schraud Waibel Wohlfrom Patentanwälte Partnerschaft mbB
(86) International application number: PCT/US2015/029810
(87) International publication number: WO 2015/179138

(56) References cited:
- US-A- 5 807 046
- US-A1- 2009 325 476
- US-B1- 6 296 561
- US-B1- 6 364 388

## Description

### FIELD OF THE INVENTION

The subject matter disclosed herein relates to transportation refrigeration systems and, more specifically, to return air bulkheads for transportation refrigeration systems.

### BACKGROUND

Temperature controlled cargo containers, such as refrigerated trailers, are commonly used to transport food products and other temperature sensitive products. A refrigerated trailer typically includes a refrigeration unit generally mounted on the front wall of the trailer with a portion protruding into the interior of the trailer.

In some known trailers, the cargo may shift during transport and slide against the front of the trailer. Such cargo shift may damage the refrigeration unit or block air circulating into the refrigeration unit. To prevent this problem, a return air bulkhead may be mounted to the trailer to provide protection and adequate airflow to the refrigeration unit. However, known bulkheads have a fixed height and often do not match up with the height of the evaporator with which they are installed. For example, some known bulkheads may be too tall for a low-cube trailer, which may cause the bulkhead to interfere with the evaporator and inhibit return air flow. Alternatively, some known bulkheads may be too short for a high-cube trailer. This may require the bulkhead to be raised off the trailer floor to avoid blocking the air return path, which causes a coverage gap that leaves the trailer interior front wall vulnerable to damage. Additionally, some known bulkheads may block the evaporator air inlet openings. US 6,364,388 B1 shows an air return bulkhead comprising a first bulkhead portion and a second bulkhead portion joined by a convoluted hinge member. The hinge permits the bulkhead portions to be moved relative to each other. In US 5,807,046 A an air return bulkhead is disclosed which may be adapted to fit on differently-sized trailer walls around differently-sized trailer refrigeration units. The bulkhead includes an upper support panel with ridges or other discontinuities thereon. The discontinuities bound areas sized to accommodate standard refrigeration units, and a cutting tool may be easily guided along these discontinuities to form a space wherein the refrigerator may be fit when the bulkhead is mounted to the trailer wall. Also disclosed is a bulkhead which includes flutes and columns thereon wherein the ends of the flutes and columns may be removed by use of a cutting tool to allow the bulkhead installer to tailor the airflow into the refrigerator inlet as desired.

### BRIEF DESCRIPTION OF THE INVENTION

In one aspect, a return air bulkhead for a temperature controlled container is provided. The bulkhead includes a lower section configured to couple to the container and an upper section separate from the lower section. The upper section is adjustably engageable to the lower section at varying heights relative to the lower section such that a total height of the return air bulkhead is adjustable. The lower section comprises a first set of grooves and the upper section comprises a second set of grooves, wherein the first set of grooves and the second set of grooves meshingly engage each other when the upper section and the lower section are engaged to orient the upper section at a desired height relative to the lower section. The lower section further comprises a first structural support pocket and the upper section further comprises a second structural support pocket; wherein the first structural support pocket includes an inner wall having the first set of grooves, and wherein the second structural support pocket includes an inner wall having the second set of grooves.

In addition to one or more of the features described above, or as an alternative, further embodiments may include: wherein at least a portion of the second structural support pocket is received within the first structural support pocket; at least one spacer extending from a rear surface of the upper section, the at least one spacer configured to space the upper section from a refrigeration unit of the container to facilitate providing a clearance for airflow to the refrigeration unit; at least one air vent formed in a front face of the lower section; wherein the lower section comprises a front wall having a front face and a rear face, a bottom wall extending from the front wall, and a pair of side walls each coupled to the bottom wall and extending from the front wall; wherein the upper section comprises a front wall having a front face and a rear face, a top wall extending from the front wall, and a pair of side walls each coupled to the top wall and extending from the front wall; wherein at least one air vent is formed in at least one of the side walls; and/or wherein the lower section is oriented inside of the upper section to define a compact assembly to facilitate transporting the return air bulkhead.

In another aspect, a temperature controlled container is provided. The container includes a plurality of walls defining a storage space, a temperature control unit coupled to a first wall of the plurality of walls, the temperature control unit configured to control the temperature of the environment in the storage space, and an adjustable height return air bulkhead coupled to the first wall about at least a portion of the temperature control unit. The bulkhead includes a lower section configured to couple to the first wall and an upper section separate from the lower section. The upper section is adjustably engageable to the lower section at varying heights relative to the lower section such that a total height of the return air bulkhead is adjustable.

In addition, the lower section comprises a first set of grooves and the upper section comprises a second set of grooves, wherein the first set of grooves and the second set of grooves meshingly engage each other when the upper section and the lower section are engaged to orient the upper section at a desired height relative to the lower section. The lower section further comprises a first structural support pocket and the upper section further comprises a second structural support pocket; wherein the first structural support pocket includes an inner wall having the first set of grooves, and wherein the second structural support pocket includes an inner wall having the second set of grooves. Additionally, further embodiments may include at least a portion of the second structural support pocket is received within the first structural support pocket.

Additionally, a method of fabricating an adjustable height return air bulkhead for a temperature controlled container is provided. The method includes forming a lower section configured to couple to the container and forming an upper section separate from the lower section. The upper section is adjustably engageable to the lower section at varying heights relative to the lower section such that a total height of the return air bulkhead is adjustable.

In addition to one or more of the features described above, or as an alternative, further embodiments may include: forming a first set of grooves in the upper section and forming a second set of grooves in the lower section, wherein the first set of grooves and the second set of grooves meshingly engage each other when the upper section and the lower section are engaged to orient the upper section at a desired height relative to the lower section; forming a first structural support pocket in the lower section, wherein the first set of grooves are formed in an inner wall of the first structural support pocket and forming a second structural support pocket in the upper section, wherein the second set of grooves are formed in an inner wall of the second structural support pocket; and/or sizing the upper section such that the lower section fits inside of the upper section to define a compact assembly to facilitate transporting the return air bulkhead. The method is described for a better understanding of the invention, but is not part of the claimed invention.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a side cross-sectional view of an exemplary cargo container;
FIG. 2 is a front perspective view of an exemplary return air bulkhead before assembly that may be used in the cargo container shown in FIG. 1;
FIG. 3 is a front perspective view of the return air bulkhead shown in FIG. 2 and after assembly;
FIG. 4 is a front view of the return air bulkhead shown in FIG. 3;
FIG. 5 is a rear perspective view of the return air bulkhead shown in FIG. 3;
FIG. 6 is a perspective view of the return air bulkhead shown in FIG. 2 and oriented for stacking; and
FIG. 7 is a cross-sectional view of the return air bulkhead shown in FIG. 4 and taken along line 7-7.

### DETAILED DESCRIPTION OF THE INVENTION

Described herein is an adjustable height return air bulkhead that includes two separated sections. One section may be coupled to the other at varying heights to selectively adjust the total height of the return air bulkhead. This enables the return air bulkhead to be used with various sized cargo containers.

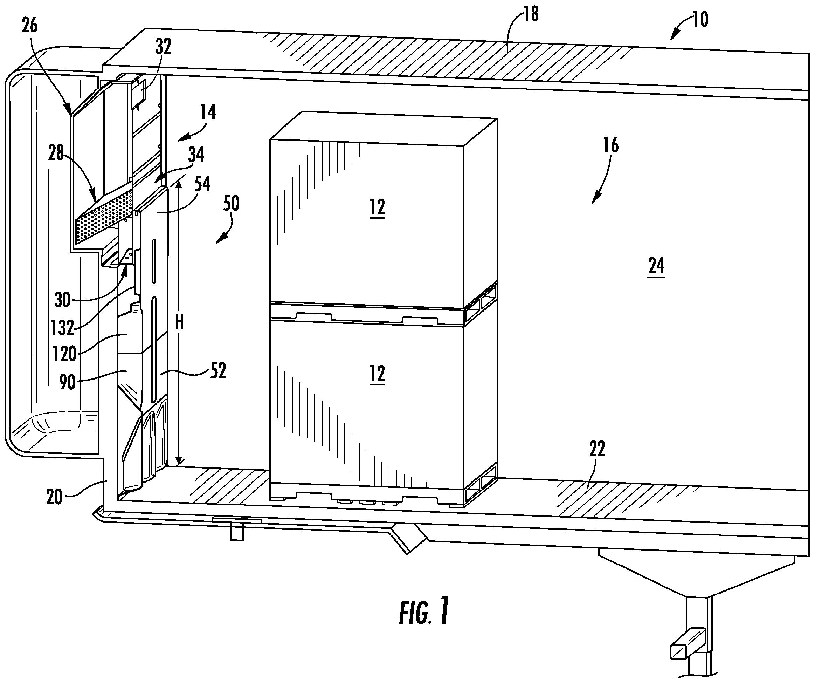

FIG. 1 illustrates a temperature controlled cargo container 10 configured to maintain a cargo 12 located inside the cargo container 10 at a selected temperature through the use of a temperature control unit 14. Cargo container 10 is utilized to transport cargo 12 via, for example, a truck, a train or a ship.

Container 10 generally includes an interior space 16 formed by thermally insulated walls including a top wall 18, a front wall 20, a rear wall (not shown), a floor 22, and side walls 24. Temperature control unit 14 is mounted at front wall 20. In the exemplary embodiment, temperature control unit 14 is a refrigeration unit that includes an exterior condenser 26 and an interior evaporator section 28 having an evaporator back panel 34. Although described as a refrigeration unit, temperature control unit 14 may be any suitable environment conditioning system.

Condenser 26 projects forwardly from the front wall 20, and interior evaporator section 28 is disposed within front wall 20 and projects rearwardly into container interior 16. Refrigeration unit 14 includes an air inlet 30 that receives air from interior space 16 and the air is then cooled by evaporator section 28. The cooled air is subsequently forced through an air outlet 32 and into space 16 to provide cooling to cargo 12.

An adjustable height return air bulkhead 50 is mounted to front wall 20 about at least a portion of refrigeration unit 14. Return air bulkhead 50 directs air from the bottom of container 10 to air inlet 30 and also protects refrigeration unit 14 and front wall 20 from damage caused by collision with moving objects (e.g., shifting cargo).

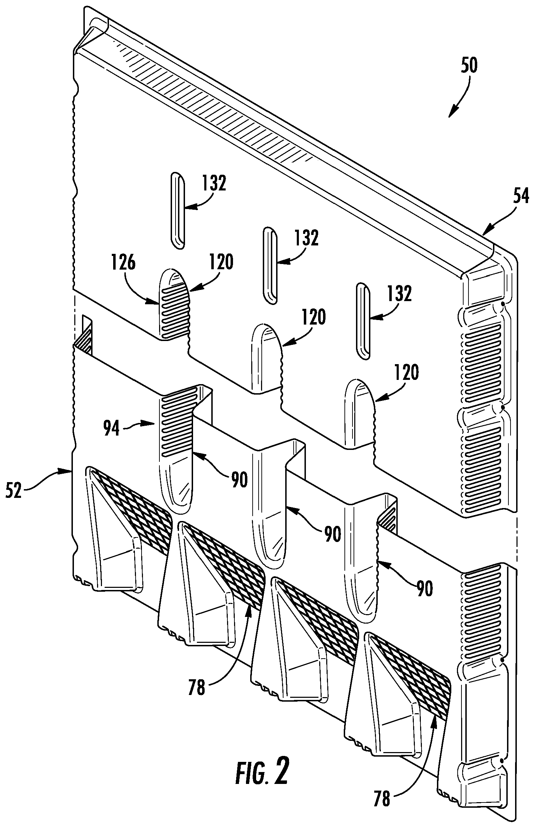

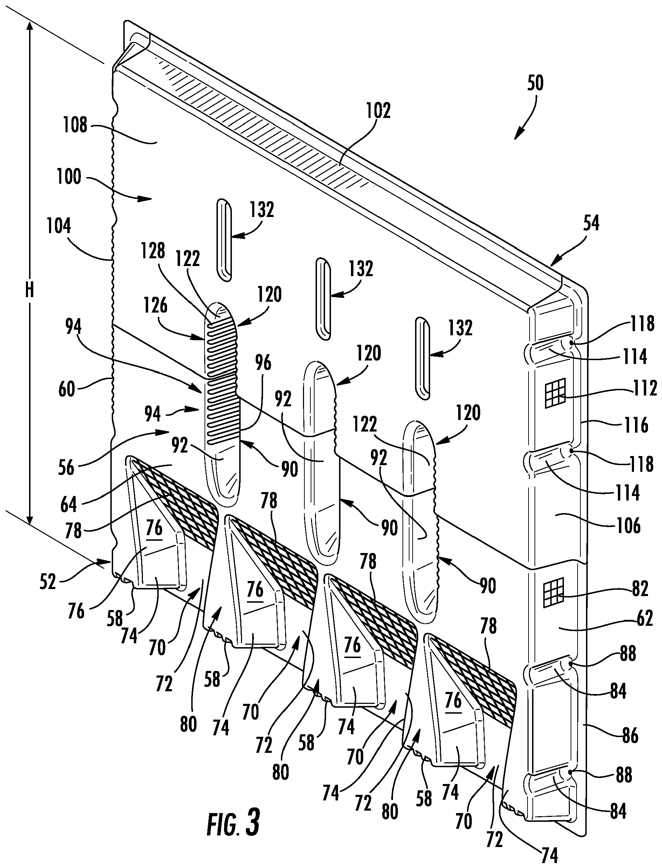

FIGS. 2-5 illustrate return air bulkhead 50 in more detail. FIG. 2 illustrates bulkhead 50 before assembly, and FIGS. 3-5 illustrate bulkhead 50 after assembly. In the exemplary embodiment, return air bulkhead 50 generally includes a lower section 52 and an upper section 54. Lower section 52 and upper section 54 are separate components such that upper section 54 may be coupled or engaged to lower section 52 at various locations to adjust a total height 'H' of bulkhead 50. As such, upper section 54 is adjustably engageable to lower section 52 at varying heights relative to lower section 52 such that the total height 'H' of bulkhead 50 is adjustable. Alternatively, upper section 54 may be adjustable relative to lower section 52 at varying heights without engaging or contacting upper section 54. For example, upper and lower sections 52, 54 may each be coupled to front wall 20 without contact between sections 52, 54.

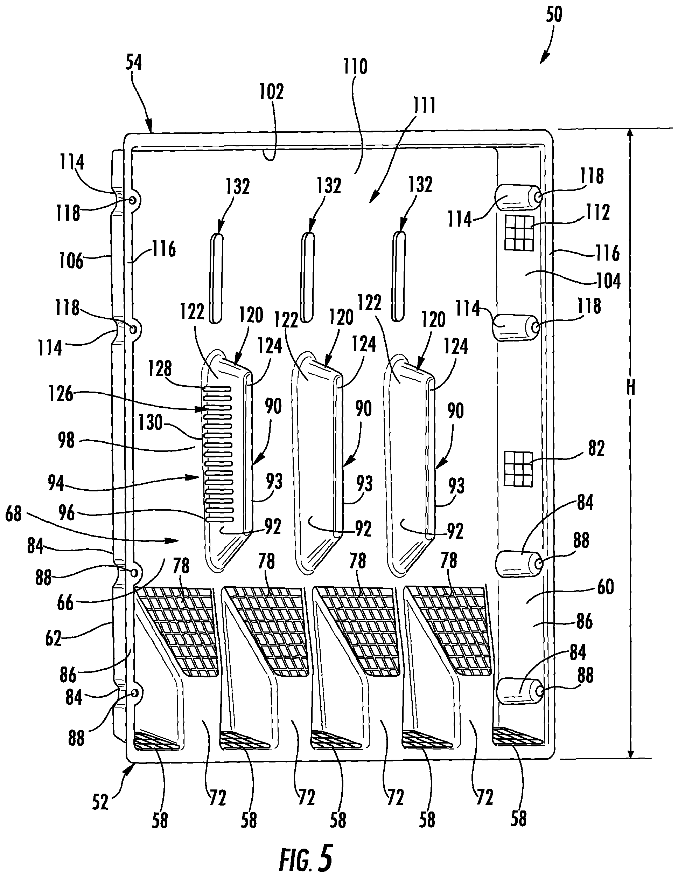

Lower section 52 generally includes a front wall 56, a bottom wall 58, and opposed sidewalls 60, 62. Front wall 56 includes a front face 64 and an opposite rear face 66. Bottom wall 58 and sidewalls 60, 62 extend from rear face 66 to generally define an inner volume 68 (FIG. 5) of lower section 52. A plurality of air vent cavities 70 are formed in front wall 56 and each air vent cavity 70 is defined by a recessed wall 72, opposed sidewalls 74, angled sidewalls 76, and an air vent 78. Air vent cavities 70 define support members 80 therebetween, which facilitate providing structural support and rigidity for protection against end loading from cargo 12. Bottom walls 58 of support members 80 may include air vents 81.

Air vent 78 is configured to facilitate flowing air from interior space 16 into refrigeration unit air inlet 30, and air vent 78 is set back from front wall 56 within air vent cavity 70 to facilitate preventing blockage by cargo 12 or other objects. Although lower section 52 is illustrated with four air vent cavities 70, lower section 52 may have any number of air vent cavities 70 that enables bulkhead 50 to function as described herein.

In one embodiment, lower section side walls 60, 62 may each include side air vents 82, tool clearances 84, and a perimeter flange 86. Side air vents 82 further facilitate flowing air from interior space 16 to refrigeration unit air inlet 30. Tool clearances 84 enable insertion of a fastener such as a screw or bolt (not shown) through an aperture 88 in perimeter flange 86 to facilitate coupling lower section 52 to container 10.

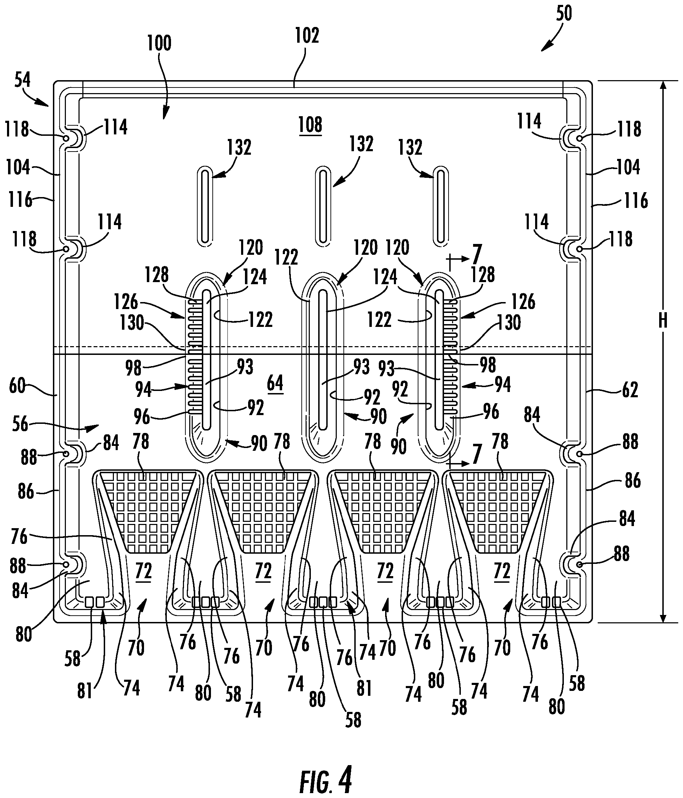

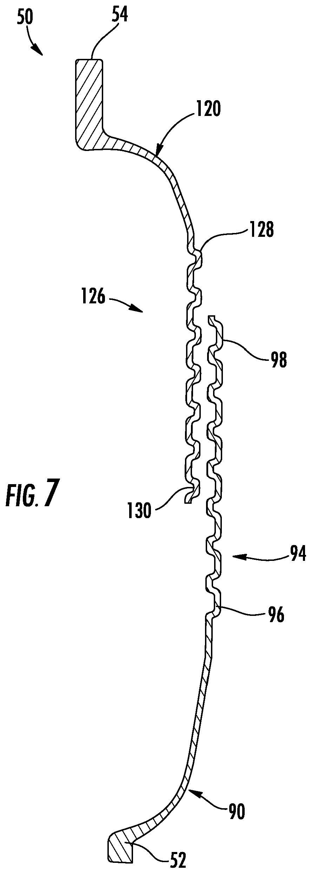

In the exemplary embodiment, a plurality of support pockets 90 are formed in front wall 56, and each support pocket 90 is defined by an inner wall 92 and a base wall 93. As shown in FIGS. 4 and 7, each support pocket 90 is generally shaped as portion of an elongated slot. However, support pockets 90 may have any suitable shape that enables bulkhead 50 to function as described herein. Similar to support members 80, support pockets 90 facilitate providing structural support and rigidity for protection against damage from loading or shifting cargo 12 colliding with bulkhead 50. Pocket inner walls 92 may include a plurality of indents or grooves 94 formed therein, which selectively receive and engage a portion of upper section 54 to position upper section 54 relative to lower section 52. Grooves 94 include a minimum height groove 96 and a maximum height groove 98, which are respectively utilized to provide a minimum and maximum total height adjustment of bulkhead 50, as is described herein in more detail.

Upper section 54 generally includes a front wall 100, a top wall 102, and opposed sidewalls 104, 106. Front wall 100 includes a front face 108 and an opposite rear face 110. Top wall 102 and sidewalls 104, 106 extend from rear face 110 to generally define an inner volume 111 (FIG. 5) of upper section 54.

Upper section side walls 104, 106 each include side air vents 112, tool clearances 114, and a perimeter flange 116. Side air vents 112 facilitate flowing air from interior space 16 to refrigeration unit air inlet 30, and tool clearances 114 enable insertion of a fastener such as a screw or bolt (not shown) through an aperture 118 in perimeter flange 116 to facilitate coupling upper section 54 to container 10.

In the exemplary embodiment, a plurality of support pockets 120 are formed in front wall 100, and each support pocket 120 is defined by an inner wall 122 and a base wall 124. As shown in FIG. 4, each support pocket 120 is generally shaped as a portion of an elongated slot. However, support pockets 120 may have any suitable shape that enables bulkhead 50 to function as described herein. Support pockets 120 facilitate providing structural support and rigidity to protect against end loading from cargo 12. Pocket inner walls 122 may include a plurality of indents or grooves 126 formed therein, which selectively mate with or engage grooves 94 of lower section 52 to secure upper section 54 relative to lower section 52. Grooves 126 include a minimum height groove 128 and a maximum height groove 130, which are respectively utilized to provide a minimum and maximum total height adjustment of bulkhead 50, as is described herein in more detail.

As shown in FIGS. 1, 4, and 5, upper section 54 includes a plurality of spacers 132 that extend from rear face 110 into inner volume 111. When bulkhead 50 is installed about refrigeration unit 14, spacers 132 are configured to rest against evaporator back panel 34 to provide and maintain a space between rear face 110 and evaporator back panel 34 to facilitate providing an area for air to flow from air vents 78, 82, 112 to air inlet 30.

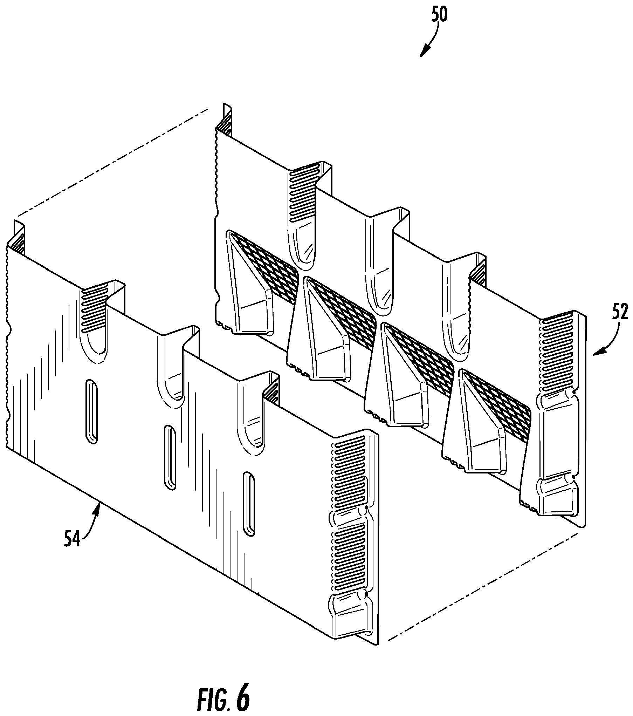

FIG. 6 illustrates lower section 52 and upper section 54 oriented for shipping or storage. As shown, lower section 52 fits into inner volume 111 of upper section 54 to facilitate providing a compact orientation of bulkhead sections 52, 54 for shipping, transport, storage, etc. when bulkhead 50 is not in use. Upper section support pockets 120 are sized to fit into lower section support pockets 90 such that lower section front face 64 abuts against upper section rear face 110.

To assemble bulkhead 50 in cargo container 10, lower section 52 is oriented against cargo container front wall 20 such that perimeter flange 86 abuts against front wall 20 and a space is formed between rear face 66 and front wall 20. Lower section 52 is then coupled to front wall 20, for example, by inserting fasteners (not shown) through apertures 88. However, lower section 52 may be coupled to front wall 20 by any suitable fastening method that enables bulkhead 50 to function as described herein. In the exemplary embodiment, lower section 52 is oriented such that at least a portion of lower section 52 contacts container floor 22. However, lower section 52 may be coupled to front wall 20 at any suitable height relative to floor 22 that enables bulkhead 50 to function as described herein.

Bulkhead upper section 54 is then assembled onto lower section 52 by inserting upper section support pockets 120 into at least a portion of lower section support pockets 90 such that grooves 126 meshingly engage grooves 94. The interlocking between grooves 126 and 94 orients upper section 54 relative to lower section 52 in a desired position to define a desired total height 'H' of bulkhead 50. Aligning upper section minimum height groove 128 with lower section minimum height groove 96 provides the lowest total height 'H' of bulkhead 50. Similarly, aligning upper section maximum height groove 130 with lower section maximum height groove 98 provides the highest total height 'H' of bulkhead 50. Accordingly, upper section 54 may be moved upwardly or downwardly relative to lower section 52 to adjust the total height 'H' of bulkhead 50. In an alternative embodiment (not shown), upper section 54 may be first coupled to front wall 20, and lower section 52 may be adjustably positioned or engaged relative to upper section 54 to provide the desired total height 'H', and then lower section 52 may be coupled to front wall 20.

When the desired total height 'H' is determined, support pockets 120 are inserted into support pockets 90 and grooves 126 and 94 are meshingly engaged to position upper section 54 relative to lower section 52. Upper section 54 is then coupled to front wall 20 by inserting fasteners (not shown) through apertures 118. However, upper section 54 may be coupled to front wall 20 by any suitable fastening method that enables bulkhead 50 to function as described herein. The total height 'H' of bulkhead 50 may subsequently be adjusted by uncoupling upper section 54 from front wall 20, varying the relative position of engagement between grooves 126 and 94, and again coupling upper section 54 to front wall 20. Once installed in cargo container 10 at the desired total height 'H', inner volumes 68 and 111 provide clearance for airflow from vents 78, 82, 112 to temperature control unit air inlet 30, and bulkhead 50 provides protection to unit 14 from shifting cargo 12 or other objects.

A method of fabricating adjustable height return air bulkhead 50 includes forming lower section 52 and forming upper section 54 as separate components. Lower section 52 may be formed with one or more air vents 78, one or more side air vents 82, one or more support pockets 90, and grooves 94. Upper section 54 may be formed with one or more side air vents 112, one or more spacers 132, one or more support pockets 120, and grooves 126.

Described herein are systems and method for an adjustable height return air bulkhead. The bulkhead includes separate upper and lower sections. The upper section may be selectively engaged to the lower section at varying positions relative thereto to provide the return air bulkhead with a desired total height. As such, the total height of the bulkhead is adjustable to various sized cargo containers.

While the invention has been described in detail in connection with only a limited number of embodiments, it should be readily understood that the invention is not limited to such disclosed embodiments. Accordingly, the invention is not to be seen as limited by the foregoing description, but is only limited by the scope of the appended claims.

## Claims

1. A return air bulkhead (50) for a temperature controlled container (10), the bulkhead comprising:
a lower section (52) configured to couple to the container (10);
an upper section (54) separate from the lower section (52), the upper section (54) adjustably engageable to the lower section (52) at varying heights relative to the lower section (52) such that a total height (H) of the return air bulkhead (50) is adjustable;
wherein the lower section (52) comprises a first set of grooves (94) and the upper section (54) comprises a second set of grooves (126), wherein the first set of grooves (94) and the second set of grooves (126) meshingly engage each other when the upper section (54) and the lower section (52) are engaged to orient the upper section (54) at a desired height relative to the lower section (52);
wherein the lower section (52) further comprises a first structural support pocket (90) and the upper section (54) further comprises a second structural support pocket (120),
wherein the first structural support pocket (90) includes an inner wall having the first set of grooves (94), and
wherein the second structural support pocket (120) includes an inner wall having the second set of grooves (126).

2. The return air bulkhead (50) of claim 1, wherein at least a portion of the second structural support pocket (120) is received within the first structural support pocket (90).

3. The return air bulkhead (50) of claim 1, further comprising at least one spacer extending from a rear surface of the upper section (54), the at least one spacer configured to space the upper section (54) from a refrigeration unit of the container (10) to facilitate providing a clearance for airflow to the refrigeration unit.

4. The return air bulkhead of claim 1, further comprising at least one air vent formed in a front face of the lower section.

5. The return air bulkhead (50) of claim 1, wherein the lower section (52) comprises a front wall having a front face and a rear face, a bottom wall extending from the front wall, and a pair of side walls each coupled to the bottom wall and extending from the front wall.

6. The return air bulkhead (50) of claim 1, wherein the upper section (54) comprises a front wall having a front face and a rear face, a top wall extending from the front wall, and a pair of side walls each coupled to the top wall and extending from the front wall.

7. The return air bulkhead (50) of claim 6, wherein at least one air vent (82, 112) is formed in at least one of the side walls (60, 62, 104, 106).

8. The return air bulkhead (50) of claim 1, wherein the lower section (52) is oriented inside of the upper section (54) to define a compact assembly to facilitate transporting the return air bulkhead.

9. A temperature controlled container (10) comprising:
a return air bulkhead (50) according to any of the preceding claims;
a plurality of walls defining a storage space;
a temperature control unit coupled to a first wall of the plurality of walls, the temperature control unit configured to control the temperature of the environment in the storage space; and
an adjustable height return air bulkhead (50) coupled to the first wall about at least a portion of the temperature control unit, the bulkhead comprising:
the lower section (52) configured to couple to the first wall.

10. The temperature controlled container (10) of claim 9, wherein at least a portion of the second structural support pocket (120) is received within the first structural support pocket (90).

## Patentansprüche

1. Rückluft-Trennwand (50) für einen temperaturgesteuerten Behälter (10), wobei die Trennwand Folgendes umfasst:
einen unteren Abschnitt (52), der konfiguriert ist, um an den Behälter (10) zu koppeln;
einen oberen Abschnitt (54) separat von dem unteren Abschnitt (52), wobei der obere Abschnitt (54) verstellbar in variierenden Höhen relativ zu dem unteren Abschnitt (52) mit dem unteren Abschnitt (52) in Eingriff bringbar ist, sodass eine Gesamthöhe (H) der Rückluft-Trennwand (50) verstellbar ist;
wobei der untere Abschnitt (52) einen ersten Satz an Nuten (94) umfasst und der obere Abschnitt (54) einen zweiten Satz an Nuten (126) umfasst, wobei der erste Satz an Nuten (94) und der zweite Satz an Nuten (126) kämmend ineinandergreifen, wenn der obere Abschnitt (54) und der untere Abschnitt (52) ineinandergreifen, um den oberen Abschnitt (54) in einer gewünschten Höhe relativ zu dem unteren Abschnitt (52) auszurichten;
wobei der untere Abschnitt (52) ferner eine erste strukturelle Stütztasche (90) umfasst und der obere Abschnitt (54) ferner eine zweite strukturelle Stütztasche (120) umfasst,
wobei die erste strukturelle Stütztasche (90) eine Innenwand beinhaltet, die den ersten Satz an Nuten (94) aufweist, und
wobei die zweite strukturelle Stütztasche (120) eine Innenwand beinhaltet, die den zweiten Satz an Nuten (126) aufweist.

2. Rückluft-Trennwand (50) nach Anspruch 1, wobei zumindest ein Abschnitt der zweiten strukturellen Stütztasche (120) innerhalb der ersten strukturellen Stütztasche (90) aufgenommen ist.

3. Rückluft-Trennwand (50) nach Anspruch 1, ferner umfassend zumindest einen Abstandshalter, der sich von einer Rückseite des oberen Abschnitts (54) erstreckt, wobei der zumindest eine Abstandshalter konfiguriert ist, um den oberen Abschnitt (54) von einer Kälteeinheit des Behälters (10) zu beabstanden, um das Bereitstellen eines Abstands für Luftstrom zu der Kälteeinheit zu vereinfachen.

4. Rückluft-Trennwand (50) nach Anspruch 1, ferner umfassend zumindest eine Entlüftungsöffnung, die in einer Vorderseite des unteren Abschnitts gebildet ist.

5. Rückluft-Trennwand (50) nach Anspruch 1, wobei der untere Abschnitt (52) eine Vorderwand, die eine Vorderseite und eine Rückseite aufweist, eine untere Wand, die sich von der Vorderwand erstreckt, und ein Paar an Seitenwänden umfasst, die jeweils an die untere Wand gekoppelt sind und sich von der Vorderwand erstrecken.

6. Rückluft-Trennwand (50) nach Anspruch 1, wobei der obere Abschnitt (54) eine Vorderwand, die eine Vorderseite und eine Rückseite aufweist, eine obere Wand, die sich von der Vorderwand erstreckt, und ein Paar an Seitenwänden umfasst, die jeweils an die obere Wand gekoppelt sind und sich von der Vorderwand erstrecken.

7. Rückluft-Trennwand (50) nach Anspruch 6, wobei zumindest eine Entlüftungsöffnung (82, 112) in zumindest einer der Seitenwände (60, 62, 104, 106) gebildet ist.

8. Rückluft-Trennwand (50) nach Anspruch 1, wobei der untere Abschnitt (52) innerhalb des oberen Abschnitts (54) ausgerichtet ist, um eine kompakte Baugruppe zu definieren, um das Transportieren der Rückluft-Trennwand zu vereinfachen.

9. Temperaturgesteuerter Behälter (10), umfassend:
eine Rückluft-Trennwand (50) nach einem der vorhergehenden Ansprüche;
eine Vielzahl von Wänden, die einen Aufbewahrungsraum definiert;
eine Temperatursteuereinheit, die an eine erste Wand aus der Vielzahl von Wänden gekoppelt ist, wobei die Temperatursteuereinheit konfiguriert ist, um die Temperatur der Umgebung in dem Aufbewahrungsraum zu steuern; und
eine höhenverstellbare Rückluft-Trennwand (50), der über zumindest einen Abschnitt der Temperatursteuereinheit an die erste Wand gekoppelt ist, wobei die Trennwand Folgendes umfasst:
den unteren Abschnitt (52), der konfiguriert ist, um an die erste Wand zu koppeln.

10. Temperaturgesteuerter Behälter (10) nach Anspruch 9, wobei zumindest ein Abschnitt der zweiten strukturellen Stütztasche (120) innerhalb der ersten strukturellen Stütztasche (90) aufgenommen ist.

## Revendications

1. Cloison d'air de retour (50) pour un conteneur (10) à température contrôlée, la cloison comprenant :
une section inférieure (52) configurée pour se coupler au conteneur (10) ;
une section supérieure (54) séparée de la section inférieure (52), la section supérieure (54) pouvant venir en prise de manière réglable avec la section inférieure (52) à différentes hauteurs par rapport à la section inférieure (52), de sorte qu'une hauteur totale (H) de la cloison d'air de retour (50) est réglable ;
dans laquelle la section inférieure (52) comprend un premier ensemble de rainures (94) et la section supérieure (54) comprend un second ensemble de rainures (126), dans laquelle le premier ensemble de rainures (94) et le second ensemble de rainures (126) s'engrènent l'un à l'autre lorsque la section supérieure (54) et la section inférieure (52) sont en prise pour orienter la section supérieure (54) à une hauteur souhaitée par rapport à la section inférieure (52) ;
dans laquelle la section inférieure (52) comprend en outre une première poche de support structurel (90) et la section supérieure (54) comprend en outre une seconde poche de support structurel (120),
dans laquelle la première poche de support structurel (90) comporte une paroi interne dotée du premier ensemble de rainures (94), et
dans laquelle la seconde poche de support structurel (120) comporte une paroi interne dotée du second ensemble de rainures (126) .

2. Cloison d'air de retour (50) selon la revendication 1, dans laquelle au moins une partie de la seconde poche de support structurel (120) est reçue à l'intérieur de la première poche de support structurel (90).

3. Cloison d'air de retour (50) selon la revendication 1, comprenant en outre au moins une entretoise s'étendant depuis une surface arrière de la section supérieure (54), l'au moins une entretoise étant configurée pour espacer la section supérieure (54) d'une unité de réfrigération du conteneur (10) afin de faciliter la fourniture d'un dégagement pour l'écoulement d'air vers l'unité de réfrigération.

4. Cloison d'air de retour selon la revendication 1, comprenant en outre au moins une ouverture d'aération formée dans une face avant de la section inférieure.

5. Cloison d'air de retour (50) selon la revendication 1, dans laquelle la section inférieure (52) comprend une paroi avant dotée d'une face avant et d'une face arrière, une paroi inférieure s'étendant depuis la paroi avant et une paire de parois latérales chacune couplées à la paroi inférieure et s'étendant depuis la paroi avant.

6. Cloison d'air de retour (50) selon la revendication 1, dans laquelle la section supérieure (54) comprend une paroi avant dotée d'une face avant et d'une face arrière, une paroi supérieure s'étendant depuis la paroi avant et une paire de parois latérales chacune couplées à la paroi supérieure et s'étendant depuis la paroi avant.

7. Cloison d'air de retour (50) selon la revendication 6, dans laquelle au moins une ouverture d'aération (82, 112) est formée dans au moins une des parois latérales (60, 62, 104, 106).

8. Cloison d'air de retour (50) selon la revendication 1, dans laquelle la section inférieure (52) est orientée à l'intérieur de la section supérieure (54) pour définir un ensemble compact afin de faciliter le transport de la cloison d'air de retour.

9. Conteneur (10) à température contrôlée comprenant :
une cloison d'air de retour (50) selon l'une quelconque des revendications précédentes ;
une pluralité de parois définissant un espace de stockage ;
une unité de contrôle de température couplée à une première paroi de la pluralité de parois, l'unité de contrôle de température étant configurée pour contrôler la température de l'environnement dans l'espace de stockage ; et
une cloison d'air de retour (50) à hauteur réglable couplée à la première paroi autour d'au moins une partie de l'unité de contrôle de température, la cloison comprenant :
la section inférieure (52) configurée pour se coupler à la première paroi.

10. Conteneur (10) à température contrôlée selon la revendication 9, dans lequel au moins une partie de la seconde poche de support structurel (120) est reçue à l'intérieur de la première poche de support structurel (90).
